Europäisches Patentamt

(19) European Patent Office

Office européen des brevets

(11) Numéro de publication : **0 055 149**
**B1**

(12) **FASCICULE DE BREVET EUROPÉEN**

(45) Date de publication du fascicule du brevet :
15.05.85

(21) Numéro de dépôt : 81401809.9

(22) Date de dépôt : 18.11.81

(51) Int. Cl.⁴ : **H 02 J   7/16, H 02 J   7/24**

(54) **Dispositif de charge de batterie, notamment pour véhicules automobiles.**

(30) Priorité : 24.12.80 FR 8027428

(43) Date de publication de la demande :
30.06.82 Bulletin 82/26

(45) Mention de la délivrance du brevet :
15.05.85 Bulletin 85/20

(84) Etats contractants désignés :
**DE GB IT**

(56) Documents cités :
**DE-A- 2 814 362**
**FR-A- 2 254 140**
**FR-A- 2 358 778**
**GB-A- 1 567 002**
**US-A- 3 496 443**

(73) Titulaire : **DUCELLIER & Cie**
**Echat 950**
**F-94024 Créteil Cedex (FR)**

(72) Inventeur : **Rosemont, Aurélien**
**20 cité Moynet**
**F-75012 Paris (FR)**

(74) Mandataire : **Habert, Roger**
**DUCELLIER & Cie 2, rue Boulle Echat 950**
**F-94024 Créteil Cedex (FR)**

## Description

La présente invention concerne un dispositif de charge de batterie, notamment pour véhicules automobiles, et plus particulièrement un dispositif de charge comportant un alternateur triphasé muni de diodes alimentant l'enroulement d'excitation dudit alternateur, au-dessus d'une valeur de tension redressée déterminée, un régulateur électronique commandant le passage du courant dans l'enroulement d'excitation et une lampe de contrôle de charge fournissant un courant de préexcitation à l'enroulement d'excitation en dessous de la valeur de tension redressée déterminée.

Dans de tels dispositifs de charge, couramment employés dans l'équipement électrique des véhicules automobiles, l'enroulement d'excitation de l'alternateur est alimenté, au démarrage, à travers la lampe de contrôle de charge.

L'accroissement de la valeur ohmique du filament, la lampe étant alors allumée, limite la valeur du courant de préexcitation retardant ainsi la vitesse d'amorçage de l'alternateur, et en conséquence la vitesse de rotation à partir de laquelle l'alternateur alimente la batterie du véhicule.

Pour remédier à cet inconvénient c'est-à-dire diminuer la vitesse de rotation à partir de laquelle l'alternateur alimente la batterie de bord on connaît par le brevet US A-3 496 443, un dispositif comprenant : un alternateur triphasé comportant trois enroulements de stator et un enroulement d'excitation ; un régulateur électronique commandant le passage du courant dans l'enroulement d'excitation ; une lampe de contrôle de charge qui, au moyen du régulateur alimente à partir d'une batterie l'enroulement d'excitation pendant la phase de démarrage de l'alternateur. L'enroulement d'excitation étant alimenté au moyen d'une tension continue provenant de la diode et du transistor qui font partie du régulateur.

Ce dispositif qui permet d'améliorer, au démarrage, les caractéristiques d'amorçage, par le fait que la lampe de contrôle de charge ne joue plus un rôle important pou l'excitation préalable, présente néanmoins l'inconvénient qu'il faut prévoir une liaison supplémentaire dans le faisceau de câbles du véhicule.

L'invention a pour but de remédier à ces inconvénients et concerne à cet effet un dispositif de charge de batterie, notamment pour véhicules automobiles, dispositif du type comportant un alternateur triphasé muni de diodes alimentant l'enroulement d'excitation dudit alternateur, un régulateur électronique commandant le passage du courant dans l'enroulement d'excitation, une lampe de contrôle de charge alimentant à partir d'une batterie l'enroulement d'excitation pendant la phase de démarrage de l'alternateur, et des moyens auxiliaires d'alimentation de l'enroulement d'excitation connectés de façon telle qu'au démarrage et pour une certaine valeur de tension de l'alternance positive d'une des phases de l'alternateur, lesdits moyens deviennent conducteurs et qu'ainsi un courant supplémentaire, provenant de la batterie circule dans l'enroulement, lesdits moyens comportant un premier transistor du type NPN, le collecteur dudit transistor étant relié, par l'intermédiaire d'un premier pont diviseur de tension constitué de résistances à la base d'un deuxième transistor, du type PNP, dont l'émetteur est relié directement à la borne positive (10a) de la batterie, caractérisé en ce que la base dudit premier transistor est reliée par l'intermédiaire d'un deuxième pont diviseur de tension constitué de résistances, à l'extrémité d'une des phases de l'alternateur, et en ce que le collecteur dudit deuxième transistor est connecté à l'extrémité de l'enroulement d'excitation, qui est reliée, d'une part, audit jeu de diodes et, d'autre part, à ladite lampe de contrôle de charge.

Dans un premier mode de réalisation de l'invention, il est prévu une diode connectée entre la phase de l'alternateur et une des extrémités de l'une des résistances constituant le pont diviseur de tension auquel la base du premier transistor est relié.

Dans un deuxième mode de réalisation ; il est prévu une résistance limitatrice de courant, connectée entre le collecteur du deuxième transistor et l'extrémité de l'enroulement d'excitation reliée aux diodes d'excitation et à la lampe de contrôle de charge.

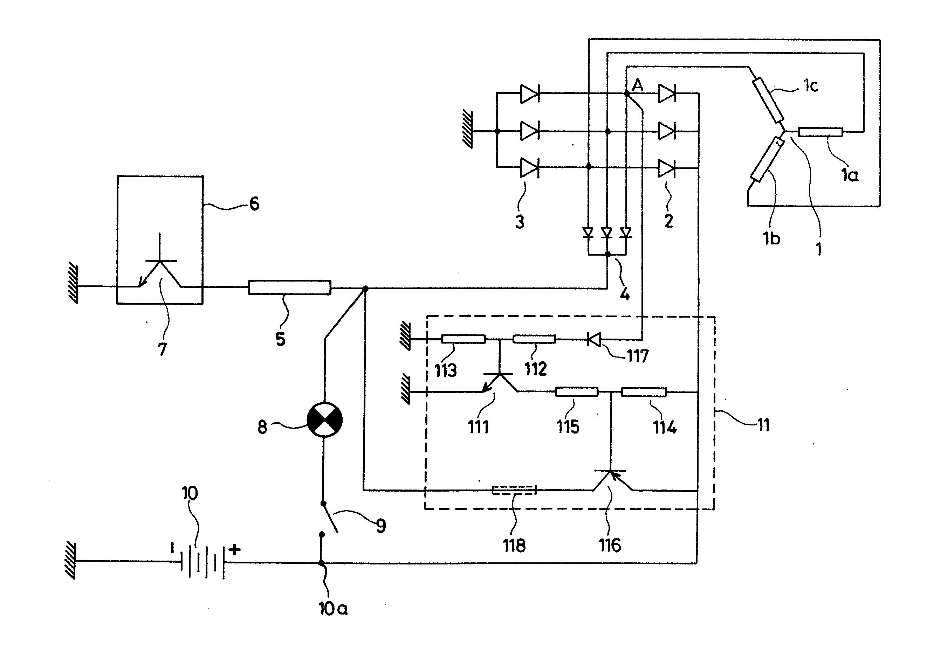

La description qui va suivre, en regard du dessin unique annexé, fera mieux comprendre comment l'invention peut être réalisée.

De façon connue, le dispositif de charge de batterie comprend un alternateur triphasé (1) comportant des enroulements statoriques (1a, 1b, 1c) qui délivrent un courant alternatif redressé par un jeu de diodes positives (2) et un jeu de diodes négatives (3).

Cet alternateur est muni d'un jeu de diodes (4) qui alimente l'enroulement d'excitation (5) dudit alternateur, lequel enroulement est connecté, par une de ses extrémités, à un régulateur électronique (6) dont on a représenté l'étage de sortie sous la forme d'un transistor (7).

L'autre extrémité de l'enroulement d'excitation est reliée, d'une part, au jeu de diodes (4) et, d'autre part, à une lampe de contrôle de charge (8) connectée, par l'intermédiaire d'un interrupteur (9) à une batterie (10).

Dans cet exemple, l'interrupteur (9) est la clé de contact du véhicule.

Selon un premier mode de réalisation de l'invention, les moyens auxiliaires d'alimentation (11) sont constitués d'un premier transistor (111), de type NPN, dont la base est reliée par l'intermédiaire d'un pont diviseur de tension constitué des résistances (112, 113) au point A de l'une des phases de l'alternateur, le collecteur dudit transistor (111) étant relié, par l'intermédiaire d'un pont diviseur de tension constitué des résistances (114, 115) à la base d'un deuxième transistor (116), du type PNP, dont l'émetteur est relié directement à la borne positive (10a) de la batterie, et dont le collecteur est connecté à l'extrémité de l'enroulement d'excitation qui est reliée d'une part aux diodes d'excitation et, d'autre part à la lampe de contrôle de charge.

Dans ce premier mode de réalisation, il est prévu une diode (117) dont l'anode est reliée au point A et dont la cathode est reliée à l'une des extrémités de la résistance (112).

Après fermeture de la clé de contact (9) et démarrage du moteur à combustion interne, équipant le véhicule automobile, l'enroulement d'excitation (5) est alimenté par la batterie (10) ; au travers de la lampe de contrôle de charge (8).

Ce courant d'excitation insuffisant pour faire s'amorcer très rapidement l'alternateur, ce qui devient une nécessité sur les véhicules modernes, provoque néanmoins l'apparition d'une tension alternative au point A, tension dont l'amplitude augmente en fonction de l'accroissement de la vitesse de rotation.

Selon l'invention, l'alternance positive de cette tension est appliquée par l'intermédiaire de la diode (117), et du pont diviseur de tension constitué des résistances (112 et 113) à la base du transistor (111) qui à partir d'une certaine valeur de tension, déterminée par la diode (111) et les résistances (112 et 113) devient conducteur pendant une fraction de la durée de l'alternance positive.

La conduction du transistor (111) entraîne en conséquence, la conduction du transistor (116) ce qui a pour effet de renforcer le courant d'excitation de l'enroulement (5) par un courant supplémentaire provenant de la batterie et s'écoulant au travers de la voie émetteur-collecteur du transistor (116), le transistor (7) du régulateur (6) étant, de façon connue, conducteur pendant cette phase de démarrage.

L'augmentation du courant d'excitation, ainsi obtenue, accroît l'amplitude de la tension présente au point A et provoque ainsi, rapidement, l'apparition d'une tension suffisante à la sortie du jeu de diodes (4), laquelle tension permet, de façon connue, d'alimenter, à suffisance, l'enroulement d'excitation (5).

Dans cette condition, les tensions étant égales à l'extrémité de l'enroulement reliée d'une part au jeu de diodes (4) et d'autre part, à la lampe de contrôle de charge (8) le courant d'excitation supplémentaire délivré par la batterie au travers de la voie émetteur-collecteur du transistor (116) s'annule.

Pour la même raison, la lampe de contrôle de charge (8) qui était allumée, s'éteint.

Dans le deuxième mode de réalisation, la diode (117) qui retardait d'une valeur fixe de tension, l'état de conduction des transistors (111 et 116) et en conséquence diminuait la durée de conduction par rapport à la durée de l'alternance, est supprimée.

Dans ce cas, la durée de conduction étant accrue il est prévu une résistance limitatrice d'intensité (118) en série entre le collecteur du transistor (116) et l'enroulement d'excitation.

Il est évident, pour l'homme de l'art, que les moyens auxiliaires d'alimentation (11) peuvent être disposés à l'intérieur du régulateur électronique (6).

**Revendications**

1. Dispositif de charge de batterie, notamment pour véhicules automobiles, dispositif du type comportant un alternateur triphasé (1), muni de diodes (4) alimentant l'enroulement d'excitation (5) dudit alternateur, un régulateur électronique (6) commandant le passage du courant dans l'enroulement d'excitation (5), une lampe de contrôle de charge (8) alimentant à partir d'une batterie (10) l'enroulement d'excitation (5) pendant la phase de démarrage de l'alternateur, et des moyens auxiliaires d'alimentation (11) de l'enroulement d'excitation (5) connectés de façon telle qu'au démarrage et pour une certaine valeur de tension de l'alternance positive d'une des phases de l'alternateur, lesdits moyens (11) deviennent conducteurs et qu'ainsi un courant supplémentaire, provenant de la batterie (10) circule dans l'enroulement (5), lesdits moyens comportant un premier transistor (111) du type NPN, le collecteur dudit transistor (111) étant relié, par l'intermédiaire d'un premier pont diviseur de tension constitué de résistances (114, 115) à la base d'un deuxième transistor (116) du type PNP, dont l'émetteur est relié directement à la borne positive (10a) de la batterie, caractérisé en ce que la base dudit premier transistor (111) est reliée, par l'intermédiaire d'un deuxième pont diviseur de tension constitué de résistances (112, 113) à l'extrémité d'une des phases de l'alternateur, et en ce que le collecteur dudit deuxième transistor (116) est connecté à l'extrémité de l'enroulement d'excitation (5), qui est reliée, d'une part, audit jeu de diodes (4) et, d'autre part, à ladite lampe de contrôle de charge (8).

2. Dispositif selon la revendication 1, caractérisé en ce qu'il est prévu une diode (117) connectée par son anode avec l'extrémité d'un des enroulements de phase de l'alternateur et par sa cathode à l'une des extrémités d'une (112) des résistances de manière à fixer, à une certaine valeur de tension, constituant ledit deuxième pont diviseur de tension le seuil de conduction du transistor (111).

3. Dispositif selon la revendication 1, caractérisé en ce qu'il est prévu une résistance limitatrice de courant (118) connectée en série entre le collecteur dudit deuxième transistor (116) et l'extrémité de l'enroulement d'excitation (5) reliée, d'une part, au jeu de diodes (4) et, d'autre part, à la lampe de contrôle de charge (8).

**Claims**

1. Battery charger device, in particular for motor vehicles, being a device comprising a three-phase alternator (1) equipped with diodes (4) feeding the excitation winding (5) of the said alternator, an electronic regulator (6) controlling the flow of current in the excitation winding (5), a charge indicator lamp (8) feeding the excitation winding (5) from the battery (10) during the starting stage of the alternator, and auxiliary means (11) for supplying the excitation winding (5) which are connected in a manner such that upon starting and for a particular voltage value of the positive alternation of one of the alternator phases, the said means (11) become conductive and a supplemental current coming from the battery (10) thus flows in the winding (5), the said means comprising a first transistor (111) of the NPN type, the collector of the said transistor (111) being joined by means of a first voltage divider bridge comprising resistors (114, 115) to the base of a second transistor (116) of the PNP type, of which the emitter is connected direct to the positive terminal (10a) of the battery, characterised in that the base of the said first transistor (111) is connected by means of a second voltage divider bridge comprising resistors (112, 113) to the end of one of the alternator phases, and in that the collector of the said second transistor (116) is connected to the extremity of the excitation winding (5) which is connected on the one hand to the said group of diodes (4) and on the other hand to the said charge indicator lamp (8).

2. Device according to claim 1, characterised in that there is provided a diode (117) connected by its anode to the extremity of one of the phase windings of the alternator and by its cathode to one of the extremities of one (112) of the resistors forming the said second voltage divider bridge, in such manner as to set the conduction threshold of the transistor (111) at a particular voltage value.

3. Device according to claim 1, characterised in that there is provided a current limiter resistor (118) connected in series between the collector of the said second transistor (116) and the extremity of the excitation winding (5) connected on the one hand to the group of diodes (4) and on the other hand to the charge indicator lamp (8).

**Patentansprüche**

1. Batterieladevorrichtung, insbesondere für Kraftfahrzeuge, mit einem Drehstromgenerator (1), der mit einem Diodensatz (4) zur Speisung seiner Erregerwicklung (5) ausgestattet ist, mit einem elektronischen Regler (6) zur Steuerung des Stromflusses durch die genannte Erregerwicklung (5), mit einer Ladekontrollampe (8), über welche die Erregerwicklung (5) während der Anlaufphase des Drehstromgenerators (1) von einer Batterie (10) aus gespeist wird, sowie mit einer Hilfseinrichtung (11) zur Speisung der Erregerwicklung (5), die derart ausgebildet ist, daß sie beim Anlaufen und bei einem vorbestimmten Spannungswert der positiven Halbwelle einer der Phasen des Drehstromgenerators (1) leitend wird, so daß ein Hilfsstrom von der Batterie (10) durch die Erregerwicklung (5) fließt, und die (11) einen ersten Transistor (111) vom NPN-Typ umfaßt, dessen Kollektor über eine aus Widerständen (114, 115) bestehende erste Spannungsteilerbrücke mit der Basis eines zweiten Transistors (116) vom PNP-Typ verbunden ist, dessen Emitter direkt mit positiven Pol (10a) der Batterie (10) in Verbindung steht, dadurch gekennzeichnet, daß die Basis des ersten Transistors (111) über eine aus Widerständen (112, 113) bestehende zweite Spannungsteilerbrücke mit dem Wicklungsende einer der Phasenwicklungen des Drehstromgenerators verbunden ist, und daß der Kollektor des zweiten Transistors (116) an dasjenige Wicklungsende der Erregerwicklung (5) angeschlossen ist, das einerseits mit dem genannten Diodensatz (4) und andererseits mit der Ladekontrollampe (8) verbunden ist.

2. Batterieladevorrichtung nach Anspruch 1, dadurch gekennzeichnet, daß eine Diode (117) vorgesehen ist, deren Anode mit dem Wicklungsende einer (1c) der Phasenwicklungen (1a, 1b, 1c) des Drehstromgenerators und dessen Kathode mit einem der Anschlüsse eines (112) der die zweite Spannungsteilerbrücke bildenden Widerstände verbunden ist, derart daß die Leitfähigkeitsschwelle des ersten Transistors (111) auf einen vorbestimmten Spannungswert fixiert wird.

3. Batterieladevorrichtung nach Anspruch 1, dadurch gekennzeichnet, daß ein Strombegrenzungswiderstand (118) vorgesehen ist, der in Reihe zwischen den Kollektor des zweiten Transistors (116) und dasjenige Wicklungsende der Erregerwicklung (5) geschaltet ist, das einerseits mit dem genannten Diodensatz (4) und andererseits mit der Ladekontrollampe (8) verbunden ist.